Europäisches Patentamt

European Patent Office

Office européen des brevets

(11) Veröffentlichungsnummer: **0 214 475 B1**

# EUROPÄISCHE PATENTSCHRIFT

(45) Veröffentlichungstag der Patentschrift: **26.06.91**

(51) Int. Cl.⁵: **H04L 12/28**

(21) Anmeldenummer: **86110943.7**

(22) Anmeldetag: **07.08.86**

(54) **Schaltungsanordnung zum Übertragen von Datensignalen zwischen über ein Ringleitungssystem miteinander verbundenen Steuereinrichtungen.**

(30) Priorität: **11.09.85 DE 3532442**

(43) Veröffentlichungstag der Anmeldung:
**18.03.87 Patentblatt 87/12**

(45) Bekanntmachung des Hinweises auf die
Patenterteilung:
**26.06.91 Patentblatt 91/26**

(84) Benannte Vertragsstaaten:
**AT BE CH DE FR GB IT LI LU NL SE**

(56) Entgegenhaltungen:
**EP-A- 0 150 084**
**DE-A- 3 041 600**

(73) Patentinhaber: **Siemens Aktiengesellschaft**
**Wittelsbacherplatz 2**
**W-8000 München 2(DE)**

(72) Erfinder: **Michels-Krohn, Karl-Heinz, Ing. grad.**
**Galileistrasse 2**
**W-8033 Martinsried(DE)**
Erfinder: **Untergruber, Josef, Ing. grad.**
**Heuberweg 17**
**W-8201 Nussdorf/Inn(DE)**

## Beschreibung

Die Erfindung betrifft eine Schaltungsanordnung gemäß Oberbegriff des Patentanspruches 1.

Eine derartige Schaltungsanordnung ist bereits bekannt (EP-A-150084). Bei dieser bekannten Schaltungsanordnung werden von einem Prozessorsystem her über eine Schnittstelleneinrichtung an ein Ringleitungssystem abzugebende Datensignale bereits in dem Prozessorsystem so zu einem Datensignalblock zusammengestellt, daß dieser bereits eine Empfängeradresse, eine Senderadresse sowie Zusatzinformationen beispielsweise in Form einer Anfangs- und Endekennung aufweist. Ein solcher, zunächst in einem Hauptspeicher des Prozessorsystems zwischengespeicherter Datensignalblock wird anschließend auf ein von dem Prozessorsystem abgegebenes Steuersignal hin unter der Steuerung eines der Schnittstelleneinrichtung zugehörigen Prozessors im Zuge eines DMA-Zyklus über eine Systemschnittstelle in einen Speicherbereich eines der Schnittstelleneinrichtung zugehörigen Speichers mit wahlfreiem Zugriff übernommen. Nach einer solchen Übernahme werden dann eine diesen Speicherbereich bezeichnende Adresse sowie Angaben bezüglich der Länge des gerade in den Speicher mit wahlfreiem Zugriff aufgenommenen Datensignalblockes einem "protocol handler" zugeführt. Diese Angaben werden dabei als Anfangszählerstand in ein Längenregister eingetragen. Die weitere Steuerung der Übertragung des betreffenden Datensignalblockes übernimmt dann der "protocol handler". Dabei wird von diesem der Speicher mit wahlfreiem Zugriff im Zuge eines DMA-Zyklus angesteuert, um einem Durchlaufspeicher Datenwörter des gespeicherten Datensignalblockes zuzuführen. Mit jedem Datenwort wird im übrigen der Zählerstand des zuvor erwähnten Längenregisters dekrementiert. Dieses Längenregister dient damit lediglich für die Registrierung der in den Durchlaufspeicher aufzunehmenden Datenwörter eines Datensignalblockes.

Erkennt nun der "protocol handler" ein über das Ringleitungssystem zu übertragendes Sendeberechtigungssignal, so steuert dieser die Abgabe von in dem Durchlaufspeicher gerade gespeicherten Datenwörtern an das Ringleitungssystem. Freiwerdende Speicherbereiche dieses Durchlaufspeichers werden dabei in der zuvor angegebenen Weise durch in dem Speicher mit wahlfreiem Zugriff gespeicherte Datenwörter aufgefüllt. Mit jeder Übernahme eines Datenwortes in den Durchlaufspeicher wird wieder der Zählerstand des zuvor erwähnten Längenregisters dekrementiert, bis der momentane Zählerstand einen Wert "0" annimmt. Damit ist dann die Abgabe eines Datensignalblockes an das Ringleitungssystem abgeschlossen.

Außerdem ist eine Schaltungsanordnung bekannt (DE-OS 31 36 586) zum Übertragen von Datensignalen zwischen über ein taktgesteuertes, richtungsabhängig betriebenes Ringleitungssystem miteinander verbundenen Steuereinrichtungen, die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragbar ist, vor dessen Weitergabe eine den Steuereinrichtungen jeweils zugehörige Senderanordnung von der jeweiligen Steuereinrichtung zu sendende Datensignale zusammen mit mindestens einer eine gewünschte Steuereinrichtung bezeichnenden Empfängeradresse und mit einer die jeweilige Steuereinrichtung als Sender bezeichnenden Senderadresse an das Ringleitungssystem abgibt.

Diese bekannte Schaltungsanordnung weist eine aus einer Empfangs- und Sendesteuereinrichtung und einer Betriebssteuereinrichtung bestehende Senderanordnung auf. Für die Einleitung eines Sendevorganges stellt die Senderanordnung mit Hilfe der Empfangs- und Sendesteuereinrichtung und der Betriebssteuereinrichtung die zu übertragenden Datensignale zu einem Datensignalblock zusammen, wobei den eigentlichen Datensignalen eine Empfängeradresse und eine Senderadresse beigefügt werden. Ein solcher Datensignalblock wird dann anschließend bei Eintreffen eines Sendeberechtigungssignals vor dessen Weiterleitung an das Ringleitungssystem abgegeben. Die schaltungstechnische Realisierung der Senderanordnung ist in der genannten Offenlegungsschrift nicht näher ausgeführt.

Es ist nun Aufgabe der vorliegenden Erfindung, einen Weg zu zeigen, wie bei einer Schaltungsanordnung der genannten Art die Senderanordnung ausgestaltet werden kann, um in in der Senderanordnung bereitstehende Datensignalblöcke vor deren Übertragung über das Ringleitungssystem Zusatzinformationen mit einem geringen schaltungstechnischen Aufwand einfügen zu können und um zugleich eine Geschwindigkeitsanpassung zwischen den einzelnen Steuereinrichtungen und dem Ringleitungssystem zu erreichen.

Gelöst wird die vorstehend aufgezeigte Aufgabe durch eine Schaltungsanordnung mit den Merkmalen des Patentanspruches 1.

Der Vorteil der erfindungsgemäßen Schaltungsanordnung besteht einerseits darin, daß bei dieser gegenüber dem Stand der Technik mit einem wesentlich geringeren steuerungstechnischen sowie schaltungstechnischen Aufwand eine funktionelle Trennung zwischen der Bereitstellung von Datensignalblöcken und deren Übertragung über das Ringleitungssystem erreicht ist. Andererseits besteht der Vorteil darin, daß für eine Übertragung von Datensignalen über das Ringleitungssystem innerhalb der einzelnen Steuereinrichtungen Datensignalblöcke schrittweise gebildet werden. In einem ersten Schritt werden zunächst von einer der jeweiligen Steuereinrichtung zugehörigen Signalbehandlungseinrichtung zu übertragende Datensignale mit einer Empfängeradresse sowie einer Senderadresse zu einem Datensignalblock zusammengefaßt. Anschließend werden dann in einer Sendepuffer-Anordnung den einzelnen Datenwörtern eines solchen Datensignalblockes für dessen Übertragung über das Ringleitungssystem dienende Zusatzinformationen beigefügt. Damit sind die in den Steuereinrichtungen vorhandenen Signalbehandlungseinrichtungen hinsichtlich der Bereitstellung gleichbleibender Informationen dynamisch entlastet.

Zweckmäßigerweise sind als Zusatzinformationen den Anfang bzw. das Ende eines Datensignalblockes kennzeichnende Kennbits vorgesehen, deren Auftreten in einem bestimmten Binärzustand durch den Anfangszählerstand bzw. den maximalen Zählerstand einer Zähleranordnung festgelegt ist.

Der schaltungstechnische Aufwand für die Zähleranordnung kann dadurch besonders gering gehalten werden, daß die Zähleranordnung einen Schreib-/Lese-Zähler und einen Inhaltszähler aufweist,

daß der Schreib-/Lese-Zähler zum wortweisen Aufnehmen bzw. Auslesen eines Datensignalblockes von dem vorgegebenen Anfangszählerstand ausgehend, durch welchen das Setzen des den Anfang eines Datensignalblockes kennzeichnenden Kennbits in den bestimmten Binärzustand festgelegt ist, die fortlaufende Adressierung der einem Speicher mit wahlfreiem Zugriff zugehörigen Speicherzellen bewirkt,

daß der Inhaltszähler, ausgehend von einem den Leerzustand des Speichers mit wahlfreiem Zugriff anzeigenden Anfangszählerstand, mit jeder Aufnahme eines Datensignalwortes in den Speicher mit wahlfreiem Zugriff seinen momentanen Inhaltszählerstand erhöht und seinen durch die jeweiligen Datensignalblocklänge gegebenen Inhaltszählerstand, welcher ein Maß für den erreichten Zählerstand des Schreib-/Lese-Zählers ist, festhält, und daß beim anschließenden Auslesen von Datensignalwörtern aus dem Speicher mit wahlfreiem Zugriff, ausgehend von dem zuvor erreichten Zählerstand des Inhaltszählers, dessen momentaner Zählerstand bis zum Erreichen des genannten Anfangszählerstandes erniedrigt wird, welcher das Unwirksamschalten des Schreib-/Lese-Zählers und das Setzen des das Ende des Datensignalblockes kennzeichnenden Kennbits in einen bestimmten Binärzustand bewirkt.

Für die schaltungstechnische Realisierung der bereits genannten Signalbehandlungseinrichtung ist es vorteilhaft, wenn diese aus einer Mikroprozessoranordnung gebildet ist.

Im folgenden wird die Erfindung anhand von Zeichnungen beispielsweise näher erläutert.

FIG 1 zeigt in einem Blockschaltbild ein aus einem Ringleitungssystem gebildetes Datenvermittlungssystem, bei dem die Erfindung angewandt ist,

FIG 2 zeigt in einem Blockschaltbild den Aufbau einer der in FIG 1 lediglich schematisch dargestellten Schnittstellenschaltungen und den Aufbau einer der Vermittlungseinheiten bzw. Leitungsanschlußeinheiten,

FIG 3 zeigt den Aufbau einer in den Schnittstellenschaltungen jeweils vorhandenen Sendepuffer-Anordnung,

FIG 4 zeigt den Aufbau einer Einrichtung für den Empfang eines Sendeberechtigungssignals und

FIG 5 zeigt den Aufbau einer in den Schnittstellenschaltungen jeweils vorhandenen Eingangspuffer-Anordnung.

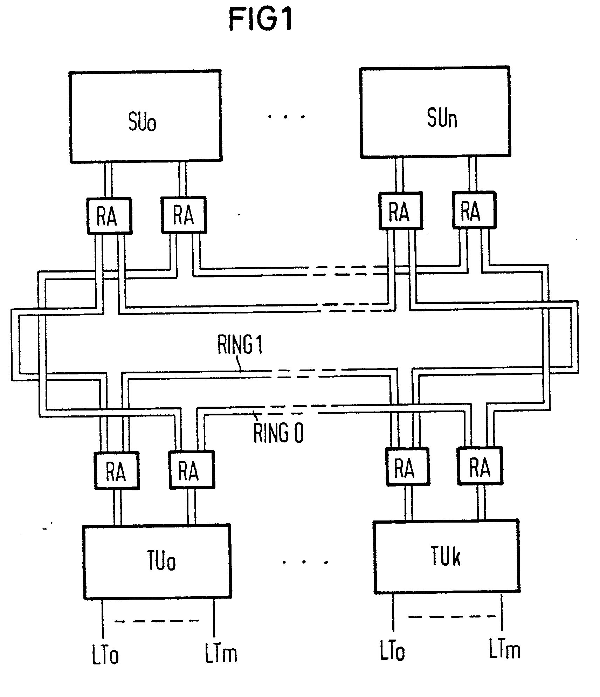

In FIG 1 ist ein Datenvermittlungssystem mit einer Mehrzahl von Vermittlungseinheiten SU0 bis SUn dargestellt. Diese Vermittlungseinheiten führen nach dem Lastteilungsprinzip die für die Übertragung von Datensignalen erforderlichen Vermittlungsfunktionen aus. Die Vermittlungseinheiten sind dafür gemeinsam an ein Ringleitungssystem angeschlossen. Ein solches Ringleitungssystem kann aus einer einzigen geschlossenen Ringleitungsanordnung bestehen. Ein solches Ringleitungssystem kann jedoch auch beispielsweise, wie in FIG 1 dargestellt, aus zwei parallel verlaufenden, voneinander unabhängigen Ringleitungsanordnungen RING0 und RING1 aufgebaut sein. Durch eine solche Redundanz ist es beispielsweise bei Ausfall einer der Ringleitungsanordnungen möglich, die Übertragung von Datensignalen auf der jeweils anderen Ringleitungsanordnung auszuführen.

Der Anschluß der genannten Vermittlungseinheiten SU0 bis SUn an die beiden Ringleitungsanordnungen erfolgt jeweils über eine für jede der Ringleitungsanordnungen gesonderte Schnittstellenschaltung RA, auf die im folgenden noch näher eingegangen wird.

Mit den genannten Ringleitungsanordnungen RING0 und RING1 ist außerdem eine Mehrzahl von Leitungsanschlußeinheiten TU0 bis TUk jeweils wieder über eine für jede der Ringleitungsanordnungen gesonderte Schnittstellenschaltung RA verbunden. Diese Leitungsanschlußeinheiten dienen zusammen mit den zugehörigen Schnittstellenschaltungen für die Datensignalübertragung zwischen den Vermittlungseinheiten und mit Teilnehmereinrichtungen verbundenen Übertragungsleitungen, die an die Leitungsanschlußeinheiten angeschlossen sind. Jede der Leitungsanschlußeinheiten weist für einen solchen Anschluß von Übertragungsleitungen eine Mehrzahl von Leitungsanschlüssen LT0 bis LTm auf.

Die aus den genannten Vermittlungseinheiten bzw. den Leitungsanschlußeinheiten und den zugehörigen Schnittstellenschaltungen gebildeten Schaltungseinheiten werden im folgenden auch als Steuereinrichtungen bezeichnet. Für den Fall, daß das Ringleitungssystem lediglich aus einer einzigen Ringleitungsanordnung besteht, gehört zu einer Steuereinrichtung lediglich eine einzige Schnittstellenschaltung.

Innerhalb des in FIG 1 dargestellten Vermittlungssystems, d. h. zwischen den Vermittlungseinheiten und den Leitungsanschlußeinheiten, erfolgt die Übertragung von Datensignalen in Form von Datensignalblöcken, welche jeweils als Datensignale im Zuge des Aufbaus einer Verbindung Signalisierungsinformationen und bei einer eingerichteten Verbindung die zwischen den in Frage kommenden Teilnehmereinrichtungen zu übertragenden Nachrichtensignale aufweisen. Dabei enthält jeder zu übertragende Datensignalblock neben den eigentlichen Datensignalen, die jeweils aus einer Mehrzahl von Bits, z. B. 8 Bits, gebildet sind, mindestens eine eine als Empfänger ausgewählte Steuereinrichtung bezeichnende Empfängeradresse, den Beginn und das Ende eines Datensignalblockes bezeichnende Anfangs- und Endekennungen, eine die jeweilige Steuereinrichtung als Sender bezeichnende Senderadresse und ein vorbereitetes Quittungssignal. Ein derartig aufgebauter Datensignalblock kann dabei nur dann an eine der Ringleitungsanordnungen abgegeben werden, wenn zuvor von dieser Steuereinrichtung ein von Steuereinrichtung zu Steuereinrichtung übertragenes, diese jeweils in einen Sendezustand steuerndes Sendeberechtigungssignal empfangen wurde.

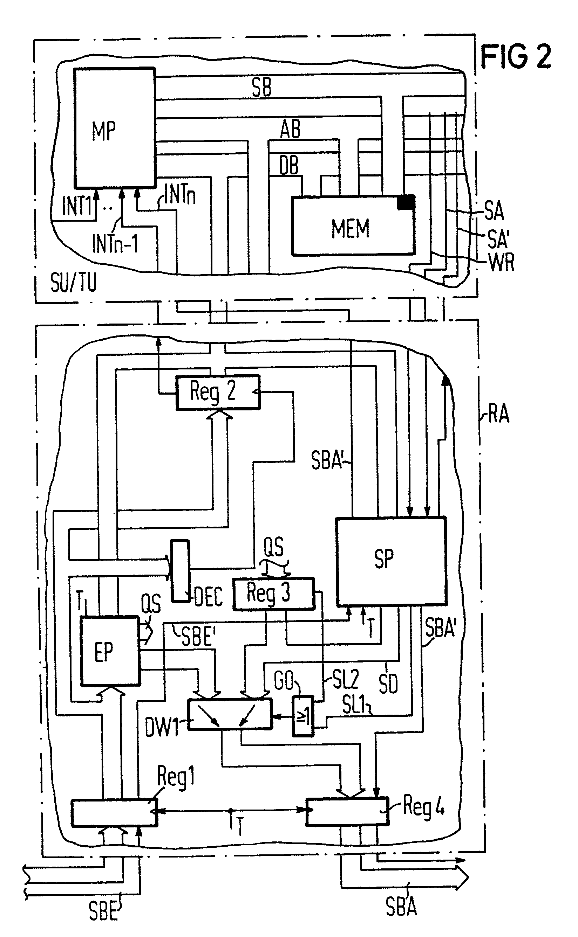

In FIG 2 ist der Aufbau einer Steuereinrichtung detaillierter dargestellt. Wie bereits oben erwähnt, besteht eine solche Steuereinrichtung entweder aus einer Vermittlungseinheit oder aus einer Leitungsanschlußeinheit, in FIG 2 durch die Bezeichnung SU/TU angedeutet, und einer der Anzahl der Ringleitungsanordnungen entsprechenden Anzahl von Schnittstellenschaltungen. Dabei ist in FIG 2 lediglich eine dieser Schnittstellenschaltungen gezeigt, da sämtliche mit den Vermittlungseinheiten bzw. Leitungsanschlußeinheiten verbundenen Schnittstellenschaltungen intern den gleichen Aufbau aufweisen.

Die in FIG 2 mit SU/TU bezeichnete ,ausschnittweise dargestellte Einheit (Vermittlungseinheit oder Leitungsanschlußeinheit) weist eine sowohl Sende- als auch Empfangsvorgänge steuernde Mikroprozessoranordnung auf. Von dieser Mikroprozessoranordnung sind dargestellt ein Mikroprozessor MP und eine über ein Busleitungssystem mit diesem verbundene, Festwertspeicher (Programmspeicher) und Schreib-/Lese-Speicher umfassende Speicheranordnung MEM. Das Busleitungssystem besteht dabei aus einem Datenbus DB, einem Adressbus AB und einem Steuerbus SB. Über den Datenbus sowie über die mit WR und SA bezeichneten Leitungen des Steuerbusses steht auch die Schnittstellenschaltung RA mit dem Mikroprozessor MP in Verbindung. Weiterhin führen zwei Steuerleitungen der Schnittstellenschaltung zu Unterbrechungseingängen INTn-1 und INTn des Mikroprozessors MP hin.

Die Schnittstellenschaltung RA läßt sich in zwei Schaltungsteile aufteilen, nämlich in einen Sendeteil für die Abgabe von Datensignalblöcken an die zugehörige Ringleitungsanordnung und in einen Empfangsteil für die Übernahme von Datensignalblöcken von der zugehörigen Ringleitungsanordnung. Im folgenden wird zunächst auf den Empfangsteil eingegangen.

An der Schnittstelle zur zugehörigen Ringleitungsanordnung ist ein Empfangsregister Reg1 vorgesehen, in welches in paralleler Form über die Ringleitungsanordnung übertragene Signale unter Steuerung eines Taktimpulse T abgebenden, nicht dargestellten Taktgenerators übernommen werden. Die Taktimpulsfolge ist im übrigen auf die Übertragungsgeschwindigkeit auf der Ringleitungsanordnung abgestimmt. Bei den gerade genannten Signalen handelt es sich jeweils um eine vorgegebene Anzahl von Datensignalen und um ein Sendeberechtigungssignal, welches auf einer gesonderten, mit SBE bezeichneten Leitung übertragen wird. Dieses Sendeberechtigungssignal kann dabei durch einen vorgegebenen, für eine bestimmte Zeitdauer auftretenden Zustand eines Binärsignals gebildet sein.

Ausgangsseitig ist das Eingangsregister Reg1 mit seinen die Datensignale führenden Ausgängen einerseits mit einer Empfangspuffer-Anordnung EP und andererseits mit einem Quittungssignalempfänger verbunden. Dieser ist aus einem Adressendecodierer DEC und einem Quittungsregister Reg2 gebildet. Beide stehen dabei eingangsseitig mit den gerade genannten Ausgängen des Eingangsregisters Reg1 in Verbindung. Der Ausgang des Adressendecodierers ist an einen Takteingang des Quittungsregisters angeschlossen. Dieses Quittungsregister wiederum weist Datensignalausgänge auf, die mit dem bereits genannten Datenbus DB verbunden sind.Darüber hinaus führt eine Steuerleitung des Quittungsregisters Reg2 zu dem Unterbrechungseingang INTn-1 des Mikroprozessors MP hin.

Die genannte Empfangspuffer-Anordnung EP dient, wie im folgenden noch näher erläutert werden wird, für die Aufnahme von für die jeweilige Steuereinrichtung bestimmten Datensignalblöcken und für die Weiterleitung von für andere, an der Ringleitungsanordnung angeschlossene Steuereinrichtungen bestimmten Datensignalblöcken. Ausgangsseitig ist diese Empfangspuffer-Anordnung einerseits mit dem bereits genannten Datenbus DB und andererseits mit ersten Eingängen einer Datenweiche DW1 sowie über eine Leitungsanordnung QS mit Eingängen eines Registers Reg3 verbunden.

Der Sendeteil der Schnittstellenschaltung RA weist eine Sendepuffer-Anordnung SP auf, welche von der bereits genannten Mikroprozessoranordnung über den Datenbus DB über die Leitungen WR und SA des Steuerbusses SB Signale zugeführt erhält. Weiterhin ist ein Eingang der Sendepuffer-Anordnung mit dem das Sendeberechtigungssignal führenden Ausgang des Eingangsregisters Reg1 über eine mit SBE' bezeichnete Leitung verbunden. Schließlich erhält die Sendepuffer-Anordnung SP an einem weiteren Eingang die Taktsignale T zugeführt.

Mit Datensignalausgängen ist die Sendepuffer-Anordnung SP über eine Leitungsanordnung SD mit weiteren Eingängen der bereits erwähnten Datenweiche DW1 verbunden. Diese Datenweiche wird unter anderem durch ein auf einer mit SL1 bezeichneten Leitung auftretendes Steuersignal von der Sendepuffer-Anordnung her gesteuert. Die Datenweiche ist dafür mit einem Steuereingang über ein ODER-Glied GO mit der Leitung SL1 verbunden.

An die zuletzt genannten Eingänge der Datenweiche DW1 ist außerdem noch das eingangsseitig mit der Leitungsanordnung QS verbundene Register Reg3 mit seinen Datensignalausgängen angeschlossen. Ein Steuerausgang dieses Registers ist über eine mit SL2 bezeichnete Leitung und das ODER-Glied GO mit dem Steuereingang der Datenweiche DW1 verbunden.

Ausgangsseitig ist die Datenweiche DW1 mit Datensignaleingängen eines an der Schnittstelle zu der zugehörigen Ringleitungsanordnung vorgesehenen, durch die Taktimpulse T gesteuerten Ausgangsregisters Reg4 verbunden. Dieses Register ist mit einem weiteren Eingang über eine mit SBA' bezeichnete Leitung an einen ein weiterzuleitendes Sendeberechtigungssignal führenden Ausgang der Sendepuffer-Anordnung SP angeschlossen. Ausgangsseitig ist das Ausgangsregister Reg4 mit der zugehörigen Ringleitungsanordnung verbunden. Die Leitung SBA' ist im übrigen auch mit dem Unterbrechungseingang INTn des Mikroprozessors MP verbunden. Über eine Leitung SA' steht schließlich die Sendepuffer-Anordnung noch mit dem Steuerbus SB in Verbindung.

Bezüglich der Empfangspuffer-Anordnung EP, und des Quittungsregisters Reg2 sei noch darauf hingewiesen, daß diese jeweils für eine Ansteuerung von dem Mikroprozessor MP her außer mit dem Datenbus DB auch noch mit dem Adressbus AB und dem Steuerbus SB in Verbindung stehen. Die jeweiligen Verbindungen sind jedoch zur Vereinfachung der FIG 2 nicht dargestellt.

Im folgenden wird nun zunächst das Zusammenwirken der in FIG 2 dargestellten Schaltungsteile bei der Übertragung von Datensignalen erläutert, ehe auf den Aufbau der Empfangspuffer-Anordnung EP und der Sendepuffer-Anordnung SP näher eingegangen wird.

Es wird zunächst davon ausgegangen, daß von der in FIG 2 dargestellten Steuereinrichtung Datensignale zu einer anderen Steuereinrichtung zu übertragen sind. Hierzu stellt zunächst die Mikroprozessoranordnung die jeweils aus einer vorgegebenen Anzahl von Bits bestehenden Datensignale zu mindestens einem Datensignalblock zusammen, wobei den eigentlichen Datensignalen eine die als Empfänger ausgewählte gnalblockes kennzeichnende Anfangskennung und eine die als Empfänger ausgewählte Steuereinrichtung bezeichnende Empfängeradresse vorangestellt werden. Ein auf diese Weise zusammengestellter Datensignalblock wird anschließend, gesteuert durch über die Leitung WR übertragene Schreibimpulse, wortweise in die Sendepuffer-Anordnung SP übertragen. Unter einem Wort soll dabei eine vorgegebene Anzahl von Bits verstanden werden, die gleichzeitig in Form eines parallelen Zeichens zu der Sendepuffer-Anordnung hin übertragen wird. Beispielsweise kann ein Wort aus 16 Bits bestehen, also aus zwei Datensignalen, wenn jedes Datensignal aus 8 Bits besteht.

Nach der wortweisen Übertragung eines Datensignalblockes gibt dann die Mikroprozessoranordnung über die Leitung SA ein Sendeanforderungssignal an die Sendepuffer-Anordnung SP ab. Dieses bleibt jedoch in der Sendepuffer-Anordnung zunächst bis zum Auftreten eines Sendeberechtigungssignals, welches über das Eingangsregister Reg1 und die Leitung SBE' zu der Sendepuffer-Anordnung hin gelangt, unberücksichtigt. Nach dem Auftreten eines Sendeberechtigungssignals wird jedoch der in der Sendepuffer-Anordnung gerade gespeicherte Datensignalblock dann wortweise über das Ausgangsregister Reg4 an die zugehörige Ringleitungsanordnung abgegeben. Dabei werden dem Datensignalblock noch eine das Ende eines Datenblockes anzeigende Endekennung und eine Senderadresse, die die den Datensignalblock sendende Steuereinrichtung bezeichnet, beigefügt sowie ein für den Empfänger vorbereitetes Quittungssignal angefügt. Im Anschluß daran leitet dann die Sendepuffer-Anordnung SP das zuvor empfangene Sendeberechtigungssignal über die Leitung SBA' an das Ausgangsregister Reg4 weiter, welches dieses Sendeberechtigungssignal an die Ringleitungsanordnung abgibt.

Nach der Abgabe des Sendeberechtigungssignals, welche dem Mikroprozessor MP durch ein Signal auf der Leitung SA' angezeigt wird, geht dann die betreffende Steuereinrichtung zunächst in einen Quittungsempfangszustand, in welchem lediglich Empfangsvorgänge abgewickelt werden können und in welchem der Unterbrechungseingang INTn des Mikroprozessors freigegeben ist.

Der Quittungsempfangszustand bleibt im Normalfall bis zum Eintreffen eines Quittungssignals, welches auf den Empfang des gerade übertragenen Datensignalblockes hin von der als Empfänger in Frage kommenden Steuereinrichtung abgegeben wird, erhalten. Bei dem Quittungssignal handelt es sich dabei um das bereits erwähnte, in dem Datensignalblock übertragene vorbereitete Quittungssignal, das in der als Empfänger in Frage kommenden Steuereinrichtung modifiziert wird. Durch dieses Modifizieren werden dem Sender den Empfang des übertragenen Datensignalblockes betreffende Informationen zugeführt. Beispielsweise kann durch ein in bestimmter Weise modifiziertes Quittungssignal der fehlerfreie Übertragung eines Datensignalblockes angezeigt werden.

Beigefügt werden einem modifizierten Quittungssignal die Adresse des Senders des gerade empfangenen Datensignalblockes und die dem Datensignalblock zugehörige Endekennung. Die Adresse und die Endekennung werden dabei dem empfangenen Datensignalblock entnommen.

Das Auftreten eines Quittungssignals wird nun mit Hilfe des bereits erwähnten Quittungssignalempfängers überwacht. Der diesem zugehörige Adressendecodierer DEC vergleicht hierzu ständig die am Ausgang des Eingangsregisters Reg1 (FIG 2) auftretenden Signale mit einem aus der der betreffenden Steuereinrichtung zugewiesenen Adresse und der vereinbarten Endekennung bestehenden Signal. Stellt dabei der Adressendecodierer eine Übereinstimmung fest, so gibt er an seinem Ausgang ein Steuersignal ab. Mit dem Auftreten dieses Steuersignals wird dann das im Anschluß an die Adresse und die Endekennung übertragene Quittungssignal in das Quittungsregister Reg2 übernommen.

Auf die Aufnahme des Quittungssignals hin gibt das Quittungsregister über seinen Steuerausgang ein Quittungsbestätigungssignal an den Mikroprozessor MP ab. Dieser übernimmt daraufhin das gerade in dem Quittungsregister gespeicherte Quittungssignal für eine anschließende Auswertung. Im Zuge dieser Auswertung überführt der Mikroprozessor dann die zugehörige Steuereinrichtung aus dem Quittungsempfangszustand in einen Zustand, in welchem eine erneute Abgabe eines Datensignalblockes möglich ist. Von der Auswertung des Quittungssignals hängt es dabei ab, ob ein gegebenenfalls weiterer, für eine Übertragung anstehender Datensignalblock übertragen wird oder ob zunächst bei einem erkannten Übertragungsfehler Maßnahmen zur Fehlerbehandlung, wie z. B. Maßnahmen zur erneuten Übertragung des zuvor abgegebenen Datensignalblockes, eingeleitet werden. Im übrigen ist in diesem Zustand der Unterbrechungseingang INTn gesperrt.

Darüber hinaus wird in den Steuereinrichtungen ständig das Eintreffen des Sendeberechtigungssignals überwacht, und zwar in der zugehörigen Sendepuffer-Anordnung SP. Diese gibt auf das Auftreten des Sendeberechtigungssignals hin ein Steuersignal an den Unterbrechungseingang INTn des Mikroprozessors MP ab. Ist bis zur Abgabe dieses Steuersignals in einer in einem Quittungsempfangszustand sich gerade befindenden Steuereinrichtung das von dieser erwartete Quittungssignal nicht eingetroffen, so überführt der Mikroprozessor MP die zugehörige Steuereinrichtung in einen Fehlermelde- und/oder Fehlerbehandlungszustand. In diesem Zustand werden gegebenenfalls neben einer Fehlermeldung Maßnahmen zur Fehlerbehandlung eingeleitet. Diese laufen darauf hinaus, daß beispielsweise sämtliche in die Übertragung des nicht quittierten Datensignalblockes einbezogenen Einrichtungen des Vermittlungssystems, d. h. die beiden in Frage kommenden Steuereinrichtungen und die für die Übertragung benutzte Ringleitungsanordnung, schrittweise überprüft werden. Ergibt diese Überprüfung dabei beispielsweise, daß die betreffende Ringleitungsanordnung oder die mit ihr verbundenen Schnittstellenschaltungen RA nicht fehlerfrei arbeiten, so kann die Fehlerbehandlung darin bestehen, daß für die Übertragung von Datensignalblöcken auf die bisher nicht benutzte Ringleitungsanordnung übergewechselt wird. Arbeiten dagegen zentrale Teile der an der Übertragung beteiligten Steuereinrichtungen nicht fehlerfrei, so kann die Fehlerbehandlung darauf hinauslaufen, daß die jeweilige Steuereinrichtung von einer weiteren Datensignalübertragung ausgeschlossen wird.

Im folgenden werden nun die bei Empfang eines Datensignalblockes in einer Steuereinrichtung ablaufenden Steuerungsvorgänge erläutert. Wie bereits oben erwähnt, ist für die Aufnahme von Datensignalblöcken die Empfangspuffer-Anordnung EP vorgesehen. Diese vergleicht bei Auftreten einer den Anfang eines Datensignalblockes bezeichnenden Anfangskennung die zu Beginn des Datensignalblockes übertragene Empfängeradresse mit einer der betreffenden Steuereinrichtung zugewiesenen Adresse. Bei einer Übereinstimmung der miteinander verglichenen Adressen werden dann die zu dem Datensignalblock gehörenden Signale bis zum Auftreten einer das Ende des Datensignalblockes anzeigenden Endekennung in eine Speicheranordnung übernommen. Dort verbleiben sie zunächst bis zur Übernahme durch die Mikroprozessoranordnung der Einheit SU/TU (FIG 2). Die Übernahme kann dabei beispielsweise auf ein von der Empfangspuffer-Anordnung bei Auftreten der Endekennung abgegebenes Steuersignal hin erfolgen. Das Steuersignal kann dafür dem Mikroprozessor an einem weiteren Unterbrechungseingang, beispielsweise dem Eingang INT1, zugeführt werden.

Vor der Übergabe eines Datensignalblockes erfolgt in der Empfangspuffer-Anordnung EP noch eine Überprüfung hinsichtlich seiner fehlerfreien Übertragung, beispielsweise in Form einer Paritätsprüfung. Dabei modifiziert die Empfangspuffer-Anordnung das in dem Datensignalblock übertragene, vom Sender des Datensignalblockes vorbereitete Quittungssignal entsprechend dem Überprüfungsergebnis und überträgt dieses modifizierte Quittungssignal dann zusammen mit der den Sender des gerade empfangenen Datensignalblockes bezeichnenden Adresse und der Endekennung zu dem Register Reg3 hin. Endekennung und Adresse werden dabei dem empfangenen Datensignalblock entnommen. Das Register Reg3 leitet dann die übernommenen Signale über die Datenweiche DW1 und das Ausgangsregister Reg4 an die Ringleitungsanordnung weiter. Die Datenweiche DW1 wird dazu von dem Register Reg3 her über die Leitung SL2 entsprechend gesteuert.

Stellt dagegen die Empfangspuffer-Anordnung EP bei Auftreten einer Anfangskennung eines Datensignalblockes eine Nichtübereinstimmung der miteinander verglichenen Adressen fest, so leitet diese den Datensignalblock unverändert an die Datenweiche DW1 weiter. Über diese Datenweiche und das nachgeschaltete Ausgangsregister Reg4 gelangt dann der Datensignalblock wieder auf die Ringleitungsanordnung und damit zu der in der Ringleitungsanordnung nachfolgenden Steuereinrichtung.

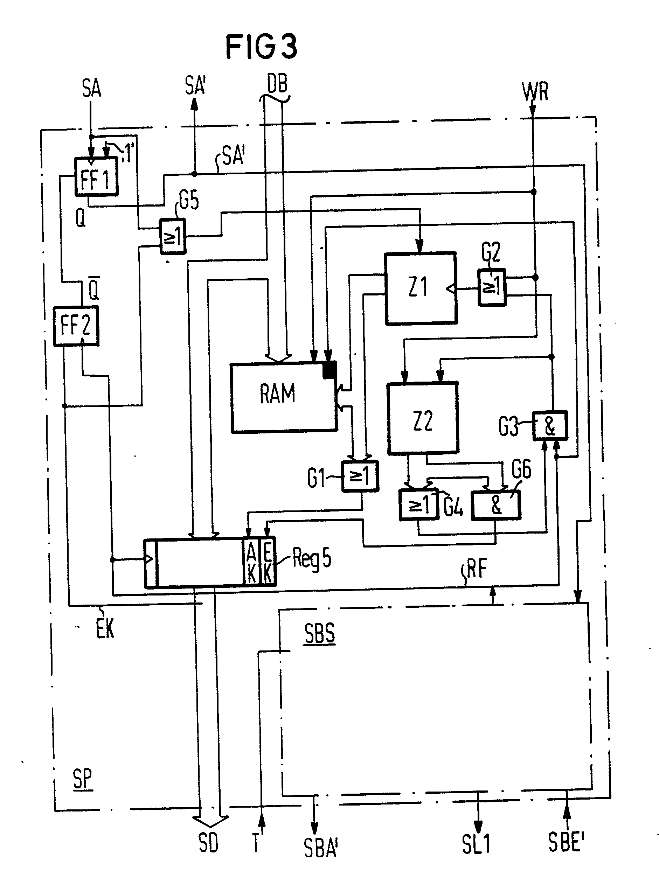

Im folgenden wird nun noch auf den Aufbau der Sendepuffer-Anordnung SP und der Empfangspuffer-Anordnung EP eingegangen. In FIG 3 ist ein Blockschaltbild der Sendepuffer-Anordnung dargestellt. Dieser Sendepuffer-Anordnung ist u. a. ein mit seinen Datensignalein-/Ausgängen an den Datenbus DB angeschlossener, eine Mehrzahl von Speicherzellen aufweisender Schreib-/Lese-Speicher RAM zugehörig. Dieser Speicher dient für die bereits erwähnte wortweise Aufnahme eines von der Mikroprozessoranordnung der Einheit SU/TU bereitgestellten Datensignalblockes und für dessen Weiterleitung an die Ringleitungsanordnung auf das Auftreten eines Sendeberechtigungssignals hin. Für die dafür erforderlichen Schreib- und Lesevorgänge erhält der Schreib-/Lese-Speicher über die bereits erwähnte Leitung WR und über eine Leitung RF Schreibimpulse bzw. Leseimpulse zugeführt. Außerdem wird dieser Speicher von einer Zähleranordnung her gesteuert, welche aus zwei Zählern Z1 und Z2 gebildet ist. Bei dem Zähler Z1 handelt es sich dabei um einen Schreib-/Lese-Zähler zur fortlaufenden Adressierung der dem Schreib-/Lese-Speicher RAM zugehörigen Speicherzelle. Dieser Zähler ist mit seinen Zählausgängen einerseits an Adresseneingänge des Schreib-/Lese-Speichers und andererseits an Eingänge eines ODER-Gliedes G1 angeschlossen. An einem Takteingang erhält der Zähler Z1 Signale von einem ODER-Glied G2 zugeführt. Dieses ODER-Glied ist über einen seiner Eingänge mit der Leitung WR und über einen weiteren Eingang mit dem Ausgang eines UND-Gliedes G3 verbunden. Ein Eingang dieses UND-Gliedes steht dabei über die Leitung RF mit einer Einrichtung für den Empfang eines Sendeberechtigungssignals SBS in Verbindung. Diese Einrichtung ist ihrerseits wiederum an die in FIG 2 dargestellten Leitungen T, SBE', SBA' und SL1 angeschlossen.

Ein weiterer Eingang des gerade erwähnten UND-Gliedes G3 ist mit einem Ausgang eines ODER-Gliedes G4 verbunden, welches eingangsseitig an Zählausgänge des bereits erwähnten Zählers Z2 angeschlossen ist. Bei diesem Zähler handelt es sich um einen Vor-/Rückwärts-Zähler, der als Inhaltszähler für den Schreib-/Lese-Speicher RAM benutzt wird. Dieser Inhaltszähler weist für das Zählen in Vorwärtsrichtung und Rückwärtsrichtung je einen Takteingang auf. Für das Zählen in Vorwärtsrichtung erhält er über die Leitung WR und für das Zählen in Rückwärtsrichtung über das bereits erwähnte UND-Glied G3 Taktsignale zugeführt.

Die in FIG 3 dargestellte Sendepuffer-Anordnung SP weist außerdem ein Register Reg5 auf. Dieses Register steht eingangsseitig mit dem Datenbus DB und den Ausgängen des bereits erwähnten ODER-Gliedes G1 und eines eingangsseitig mit den Zählausgängen des Zählers Z2 verbundenen UND-Gliedes G6 in Verbindung, wobei das ODER-Glied an die in FIG 3 mit AK und das UND-Glied an die mit EK bezeichnete Registerzelle angeschlossen ist. An einem Takteingang erhält das Register über die Leitung RF Taktsignale zugeführt. Ausgangsseitig ist dieses Register an die Leitungsanordnung SD angeschlossen.

Der Sendepuffer-Anordnung ist darüber hinaus eine Kippstufe FF1, die ausgangsseitig über eine Leitung SA' mit der Einrichtung für den Empfang eines Sendeberechtigungssignals SBS und dem Steuerbus SB in Verbindung steht, zugehörig. Die Kippstufe ist mit ihrem Takteingang an die in FIG 2 dargestellte Leitung SA angeschlossen. Ein Datensignaleingang dieser Kippstufe ist dagegen auf den logischen Pegel "1" festgelegt. Ein Rücksetzeingang der Kippstufe FF1 ist schließlich mit einem Ausgang einer weiteren Kippstufe FF2 verbunden. Diese Kippstufe erhält an ihrem Takteingang über die Leitung RF von der Einrichtung SBS Taktsignale zugeführt. Mit ihrem Datensignaleingang ist diese Kippstufe mit einer die Endekennung führenden Leitung EK der Leitungsanordnung SD verbunden. Diese Leitung EK und die zuvor erwähnte Leitung SA sind schließlich noch an ein ODER-Glied G5 angeschlossen, welches ausgangsseitig mit einem Rücksetzeingang des Zählers Z1 in Verbindung steht.

In der in FIG 3 dargestellten Sendepuffer-Anordnung SP laufen folgende Steuerungsvorgänge ab. Für die wortweise Übernahme eines Dartensignalblockes in den Schreib-/Lese-Speicher RAM werden von dem Mikroprozessor MP her über die Leitung WR der Arbeitsgeschwindigkeit des Mikroprozessors entsprechende Schreibimpulse an den Schreib-/Lese-Speicher und an die beiden Zähler Z1 und Z2 abgegeben. Durch diese Schreibimpulse erhöht sich der Zählerstand des Zählers Z1 fortlaufend, und zwar ausgehend von einem Anfangszählerstand, der der Zählerstand "0" sein möge. Diesen sich fortlaufend ändernden Zählerstand erhält der Schreib-/Lese-Speicher als Adresse für die Adressierung seiner Speicherzellen zugeführt, so daß aufeinanderfolgende Datensignalwörter des gerade zu übernehmenden Datensignalblockes in aufeinanderfolgende Speicherzellen übernommen werden.

Gleichzeitig erhöht sich mit jedem Schreibimpuls auch der Zählerstand des Zählers (Inhaltszählers) Z2 fortlaufend. Dabei wird von einem den Leerzustand des Schreib-/Lese-Speichers RAM anzeigenden Anfangszählerstand ausgegangen, der ebenfalls wieder der Zählerstand "0" sein möge. Der momentane Zählerstand des Inhaltszählers bezeichnet somit diejenige Speicherzelle, in die als nächstes ein Datensignalwort eingetragen werden kann. Der momentane Zählerstand ist dabei bis zum erneuten Auftreten eines Schreibimpulses festgehalten. Nach der Übernahme des gesamten Datensignalblockes in den Schreib-/Lese-Speicher weist der Inhaltszähler Z2 somit einen durch die Länge des Datensignalblockes gegebenen Zählerstand auf. Dieser Zählerstand ist gleichzeitig auch ein Maß für den erreichten Zählerstand des Schreib-/Lese-Zählers Z1.

Nach der Übernahme eines Datensignalblockes in den Schreib-/Lese-Speicher RAM gibt der Mikroprozessor MP über die Leitung SA ein Sendeanforderungssignal ab, welches dem Schreib-/Lese-Zähler Z1 über das ODER Glied G5 zugeführt wird. Dieses Sendeanforderungssignal bewirkt, daß der Zähler Z1 in einen Zustand rückgesetzt wird, in welchem er wieder den Anfangszählerstand an seinem Ausgang abgibt. Das Sendeanforderungssignal überführt außerdem die Kippstufe FF1 in ihren aktiven Zustand. Durch diesen aktiven Zustand wird der Einrichtung für den Empfang eines Sendeberechtigungssignals SBS das Vorliegen eines zu übertragenden Datensignalblockes angezeigt. Empfängt nun anschließend diese Einrichtung ein Sendeberechtigungssignal, so gibt sie an die Leitung RF Leseimpulse ab, die aus den der Übertragungsgeschwindigkeit des Ringleitungssystems entsprechenden Taktimpulsen T gebildet sind. Diese Leseimpulse werden dem Schreib-/Lese-Speicher RAM direkt und den beiden Zählern Z1 und Z2 über das UND-Glied G3, das durch das ODER-Glied G4 in den leitfähigen Zustand gesteuert ist, zugeführt. Außerdem werden mit diesen Leseimpulsen auch noch das Register Reg5 und die Kippstufe FF2 beaufschlagt.

Die Leseimpulse bewirken das Auslesen der in dem Schreib-/Lese-Speicher RAM gespeicherten Datensignalwörter und deren Übernahme in das Register Reg5. Begonnen wird dieses Auslesen dabei mit einem Datensignalwort, welches in der dem Anfangszählerstand des Zählers Z1 entsprechenden Speicherzelle des Schreib-/Lese-Speichers gespeichert ist. Bei diesem Datensignalwort möge es sich beispielsweise um die den eigentlichen Datensignalen vorangestellte Empfängeradresse handeln. Mit der Übernahme dieses ersten Wortes des Datensignalblockes in das Register Reg5 wird gleichzeitig das Setzen eines den Anfang dieses Datensignalblockes kennzeichnenden Kennbits in einen bestimmten Binärzustand, der z. B. der Zustand "0" sein möge, bewirkt. Dieses Setzen wird dabei durch ein Signal bewirkt, das von dem ODER-Glied G1 beim Anfangszählerstand des Zählers Z1 abgegeben wird. Für das gerade genannte Kennbit ist im übrigen die in FIG 3 mit AK bezeichnete Registerzelle des Registers Reg5 reserviert.

Neben dem gerade genannten Kennbit ist im übrigen noch ein weiteres Kennbit für die Kennzeichnung des Endes eines Datensignalblockes vorgesehen, für welches eine in FIG 3 mit EK bezeichnete Registerzelle des Registers Reg5 reserviert ist. Beide Kennbits werden jedem der in das Register Reg5 übernommenen Datensignalwörter angefügt, wobei jedoch zunächst lediglich das den Anfang eines Datensignalblockes kennzeichnende Kennbit bei Übernahme des ersten Datensignalwortes gesetzt worden ist. Für die diesem nachfolgenden Datensignalwörtern ist zunächst keines der beiden Kennbits gesetzt.

Mit jedem Auftreten eines Leseimpulses wird der Zählerstand des Zählers Z1 (Schreib-/Lese-Zähler) erhöht, so daß der Schreib-/Lese-Speicher RAM für das Auslesen der gerade gespeicherten Datensignalwörter wieder fortlaufende Adressen zugeführt erhält, und zwar in der gleichen Reihenfolge, wie zuvor die Adressen für das Einschreiben der Datensignalwörter angeboten worden sind. Gleichzeitig erhält auch der Zähler Z2 (Inhaltszähler) die Leseimpulse zugeführt. Dieser Zähler zählt nunmehr in Rückwärtsrichtung, ausgehend von dem beim Einschreiben der Datensignalwörter in den Schreib-/Lese-Speicher erreichten Zählerstand.

Das Auslesen von Datensignalwörtern und das gleichzeitige Anfügen der beiden Kennbits wird nun so lange durch ständiges Verändern der Zählerstände der Zähler Z1 und Z2 fortgesetzt, bis der Zählerstand des Zählers Z2 den Zählerstand "0" (Anfangszählerstand) annimmt, d. h. daß sämtliche Speicherzellen des Schreib-/Lese-Speichers, die zuvor mit Datensignalwörtern beschrieben worden sind, nunmehr ausgelesen sind. Bei Erreichen des Zählerstandes "1" wird das zuvor erwähnte, das Ende eines Datensignalblockes anzeigende Kennbit durch ein von dem UND-Glied G6 abgegebenes Signal hin in einen vorgegebenen Binärzustand, beispielsweise in den Zustand "0", gesetzt. Dadurch wird das zu diesem Zeitpunkt in das Register Reg5 übernommene Datensignalwort als vorletztes zu dem Datensignalblock gehörende Datensignalwort gekennzeichnet.

Bei Erreichen des Anfangszählerstandes "0" des Zählers Z2 wird außerdem das UND-Glied G3 in seinen gesperrten Zustand überführt, so daß die beiden Zähler Z1 und Z2 keine weiteren Leseimpulse zugeführt erhalten. Darüber hinaus bewirkt das Setzen des das Ende des Datensignalblockes anzeigenden Kennbits über die Kippstufe FF2 das Rücksetzen der Kippstufe FF1 in ihren inaktiven Zustand. Durch diesen inaktiven Zustand wird der Einrichtung für den Empfang eines Sendeberechtigungssignals SBS und dem Mikroprozessor MP das Ende eines Sendevorganges angezeigt. Damit steht dann die Sendepuffer-Anordnung SP für die Übernahme und Weiterleitung eines weiteren Datensignalblockes wieder zur Verfügung.

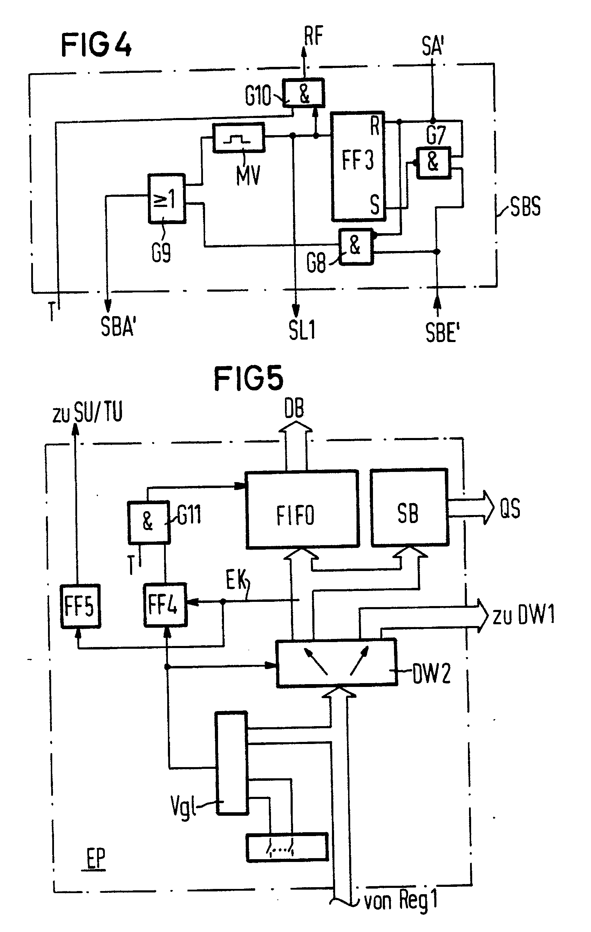

In FIG 4 ist der Aufbau der Einrichtung für den Empfang eines Sendeberechtigungssignals SBS dargestellt. Diese Einrichtung weist eine sogenannte RS-Kippstufe FF3 auf, deren Setzeingang S mit einem ein Ausgangssignal negierenden Ausgang eines UND-Gliedes G7 verbunden ist. Dieses UND-Glied ist mit einem Eingang an die das Sendeberechtigungssignal führende Leitung SBE' und mit einem weiteren Eingang an die Leitung SA' angeschlossen, wobei letztere auch an den Rücksetzeingang der Kippstufe FF3 herangeführt ist. Beide Leitungen sind außerdem mit Eingängen eines UND-Gliedes G8 verbunden, wobei der mit der Leitung SA' verbundene Eingang das ihm zugeführte Eingangssignal negiert. Ausgangsseitig ist dieses UND Glied an einen Eingang eines ODER-Gliedes G8 angeschlossen. Ein weiterer Eingang dieses ODER-Gliedes steht mit einem Ausgang einer monostabilen Kippstufe MV in Verbindung, die ihrerseits eingangsseitig mit dem Ausgang der bereits erwähnten RS-Kippstufe FF3 verbunden ist. An diesem Ausgang sind außerdem die Leitung SL1 und ein Eingang eines weiteren UND-Gliedes G10 angeschlossen. Dieses UND-Glied erhält an einem weiteren Eingang Taktimpulse T zugeführt. Ausgangsseitig ist dieses UND-Glied an die Leitung RF (FIG 3) angeschlossen.

Die in FIG 4 gezeigte Anordnung leitet immer dann sofort ein auf der Leitung SBE' auftretendes Sendeberechtigungssignal über das UND-Glied G8 und das ODER-Glied G9 an das in FIG 2 dargestellte Ausgangsregister Reg4 weiter, wenn die Kippstufe FF1 sich im inaktiven Zustand befindet, d. h. wenn von dem Mikroprozessor MP her kein Sendeanforderungssignal zuvor abgegeben worden ist . Befindet sich die Kippstufe FF1 dagegen im aktiven Zustand, so ist der gerade angegebene Übertragungsweg für das Sendeberechtigungssignal gesperrt. Bei Eintreffen eines Sendeberechtigungssignals wird die Kippstufe FF3 (FIG 4) in ihren aktiven Zustand überführt, in welchem am Ausgang des UND-Gliedes G10 die Taktimpulse T für das Auslesen eines in dem Schreib-/Lese-Speicher RAM gespeicherten Datensignalblockes auftreten. Außerdem wird in diesem aktiven Zustand der Kippstufe FF3 über die Leitung SL1 ein Steuersignal an die Datenweiche DW1 (FIG 2) abgegeben.

Das Rücksetzen der Kippstufe FF1 (FIG 3) in den inaktiven Zustand nach der Übertragung eines Datensignalblockes bewirkt, daß auch die Kippstufe FF3 in ihren inaktiven Zustand überführt wird. Bei diesem Übergang gibt die der Kippstufe FF3 nachgeschaltete monostabile Kippstufe MV ein Ausgangssignal vorgegebener Dauer ab, welches als Sendeberechtigungssignal über das ODER-Glied G9 weitergeleitet wird.

In FIG 5 ist der Aufbau der bereits erwähnten Empfangspuffer-Anordnung EP dargestellt. Diese Anordnung weist für den oben angegebenen Adressenvergleich eine mit den Datensignalausgängen des Eingangsregisters Reg1 (FIG 2) verbundene Vergleicheranordnung Vgl auf, welche bei einer Übereinstimmung der miteinander verglichenen Adressen ein Setzsignal an eine Kippstufe FF4 abgibt. Diese Kippstufe steht ausgangsseitig mit einem Eingang eines UND-Gliedes G11 in Verbindung. An einem weiteren Eingang erhält dieses UND-Glied als Schreibimpulse die Taktimpulse T zugeführt. Am Ausgang dieses UND-Gliedes G11 ist ein Schreibimpuls-Eingang eines Speichers FIFO angeschlossen. Bei diesem Speicher handelt es sich beispielsweise um einen Durchlaufspeicher, der mit seinen Datensignalausgängen mit dem Datenbus DB verbunden ist. In diesen Durchlaufspeicher wird bei Vorliegen eines gerade erwähnten Setzsignals für die Kippstufe FF4 der gerade anstehende Datensignalblock wortweise übernommen, und zwar mit Hilfe der über das UND-Glied G11 übertragenen Taktimpulse T. Die Übernahme von Datensignalwörtern erfolgt dabei solange, bis die Kippstufe FF4 durch Auftreten der das Ende des Datensignalblockes anzeigenden Endekennung in ihren inaktiven Zustand zurückgesetzt wird. Für dieses Rücksetzen ist die Kippstufe FF4 am Eingang des Durchlaufspeichers mit der die Endekennung führenden Leitung EK verbunden. Diese Leitung ist außerdem an eine weitere Kippstufe FF5 angeschlossen, die auf das Auftreten der Endekennung hin an ihrem Ausgang das bereits erwähnte, dem Mikroprozessor MP das Bereitstehen eines Datensignalblockes anzeigende Steuersignal abgibt. Auf das Auslesen eines Datensignalblockes aus dem Durchlaufspeicher FIFO wird hier nicht näher eingegangen. Dieses Auslesen erfolgt in bekannter Weise durch Zuführen von entsprechenden Steuersignalen über Leitungen des Steuerbusses SB. Das Auslesen wird dabei mit dem Auftreten eines den Leerzustand des Durchlaufspeichers FIFO anzeigenden Signals beendet. Dieses Signal erhält der Mikroprozessor MP von dem Durchlaufspeicher her zugeführt, beispielsweise in Form eines Steuersignals über den Steuerbus SB oder als Unterbrechungssignal an einem Unterbrechungseingang.

Der Eingang des Durchlaufspeichers FIFO ist mit einer Einrichtung SB für die Überprüfung empfangener Datensignalblöcke verbunden. Diese Einrichtung überprüft empfangene Datensignalblöcke hinsichtlich ihrer fehlerhaften Übertragung, beispielsweise in Form einer Paritätsprüfung. Sie modifiziert dabei das in einem empfangenen Datensignalblock enthaltene, vom Sender vorbereitete Quittungssignal entsprechend dem Überprüfungsergebnis und gibt anschließend dieses modifizierte Quittungssignal dann zusammen mit der den Sender des gerade empfangenen Datensignalblocks bezeichnenden Adresse und der Endekennung an das Register Reg 3 ab.

Dem Durchlaufspeicher FIFO ist schließlich noch eine Datenweiche DW2 vorgeschaltet. Diese Datenweiche wird von der bereits genannten Speicheranordnung Vgl her gesteuert. Sie leitet nur dann zu einem Datensignalblock gehörende Datensignalwörter an den Durchlaufspeicher weiter, wenn die Vergleicheranordnung eine Übereinstimmung der miteinander verglichenen Adressen festgestellt hat. Anderenfalls wird der gesamte empfangene Datensignalblock über die in FIG 2 dargestellte Datenweiche DW1 und das Ausgangsregister Reg4 an die zugehörige Ringleitungsanordnung weitergeleitet.

Vorstehend wurde im Zusammenhang mit der Beschreibung der Sendepuffer-Anordnung SP ausgeführt, daß den Datensignalwörtern eines Datensignalblockes jeweils zwei Kennbits, die den Anfang bzw. das Ende eines Datensignalblockes kennzeichnen, angefügt werden. Darüber hinaus ist es aber auch möglich, den einzelnen Datensignalwörtern weitere Zusatzinformationen anzufügen, die aus den Zählerständen der beiden Zähler Z1 und Z2 abgeleitet werden.

Anhand der Figuren 2 und 5 wurde erläutert, daß für den Empfang von Quittungssignalen und Datensignalblöcken in den Steuereinrichtungen jeweils zwei gesonderte Adressendecodierer, nämlich der Adressendecodierer DEC und die Vergleicheranordnung Vgl, vorgesehen sind. Anstelle dieser beiden Adressendecodierer kann jedoch auch ein einziger Adressendecodierer verwendet werden, welcher für die Erkennung von Quittungssignalen und Datensignalblöcken außer den die Adressen führenden Leitungen noch die Anfangskennung und Endekennung führenden Leitungen zugeführt erhält.

## Ansprüche

1. Schaltungsanordnung zum Übertragen von Datensignalen zwischen über ein taktgesteuertes, richtungsabhängig betriebenes Ringleitungssystem (RING0, RING1) miteinander verbundenen Steuereinrichtungen (SUO, RA;...; SUn, RA; TUO, RA, ....; TUk, RA), die insbesondere durch Steuereinrichtungen eines Datenvermittlungssystems gebildet sind, wobei über das Ringleitungssystem von Steuereinrichtung zu Steuereinrichtung ein diese jeweils in einen Sendeberechtigungszustand steuerndes Sendeberechtigungssignal übertragbar ist, vor dessen Weitergabe eine den Steuereinrichtungen jeweils zugehörige Senderanordnung (MP, MEM, SP) von der jeweiligen Steuereinrichtung zu sendende Datensignale zusammen mit mindestens einer eine gewünschte Steuereinrichtung bezeichnenden Empfängeradresse und mit einer die jeweilige Steuereinrichtung als Sender bezeichnenden Senderadresse an das Ringleitungssystem abgibt, wobei jede der Senderanordnungen eine Signalbehandlungseinrichtung (MP, MEM) aufweist, welche die von der zugehörigen Steuereinrichtung zu sendenden Datensignale unter Beifügung mindestens einer Empfängeradresse und der Senderadresse zu mindestens einem aus wenigstens einem Datensignalwort mit einer vorgegebenen Anzahl von Bits bestehenden Datensignalblock zusammenstellt und welcher eine Sendepuffer-Anordnung (SP) mit einem eine Mehrzahl von Speicherzellen aufweisenden Schreib-/Lese-Speicher (RAM) für eine wortweise Aufnahme eines zusammengestellten Datensignalblockes nachgeschaltet ist,

**dadurch gekennzeichnet,**

daß der Schreib-/Lese-Speicher als Speicher (RAM) mit wahlfreiem Zugriff ausgebildet ist, daß mit dem Speicher mit wahlfreiem Zugriff eine Zähleranordnung (Z1, Z2, SBS) verbunden ist, welche einerseits, ausgehend von einem vorgegebenen Anfangszählerstand, die genannten Speicherzellen für die wortweise Aufnahme eines Datensignalblockes nach Maßgabe eines mit einem der Arbeitsgeschwindigkeit der Signalbehandlungseinrichtung (MP, MEM) entsprechenden Schreibtakt sich ändernden Zählerstandes fortlaufend adressiert und bei einem durch die jeweilige Datensignalblocklänge vorgegebenen Zählerstand festgehalten wird und welche andererseits auf den Empfang eines Sendeberechtigungssignals hin von dem genannten Anfangszählerstand aus durch eine mit einem der Arbeitsgeschwindigkeit des Ringleitungssystems entsprechenden Lesetakt fortschreitende Veränderung ihres Zählerstandes bis zu dem festgehaltenen Zählerstand hin ein wort-weises Auslesen eines gerade in den Speicherzellen des Speichers (RAM) mit wahlfreiem Zugriff gespeicherten Datensignalblockes ermöglicht, daß dem Speicher mit wahlfreiem Zugriff ein Register (Reg5) nachgeschaltet ist, welches neben Speicherplätzen für die Aufnahme eines Datensignalwortes zusätzlich Speicherplätze für den einzelnen Datensignalwörtern beizufügende Zusatzinformationen aufweist und daß die Zusatzinformationen aus den Zählerständen der genannten Zähleranordnung abgeleitet sind.

2. Schaltungsanordnung nach Anspruch 1, **dadurch gekennzeichnet,** daß als Zusatzinformationen den Anfang bzw. das Ende eines Datensignalblockes kennzeichnende Kennbits vorgesehen sind, deren Auftreten in einem bestimmten Binärzustand ("0") durch den Anfangszählerstand bzw. den maximalen Zählerstand festgelegt ist.

3. Schaltungsanordnung nach Anspruch 2, **dadurch gekennzeichnet,** daß die Zähleranordnung (Z1, Z2, SBS) einen Schreib-/Lese-Zähler (Z1) und einen Inhaltszähler (Z2) aufweist, daß der Schreib-/Lese-Zähler zum wortweisen Aufnehmen bzw. Auslesen eines Datensignalblockes von dem vorgegebenen Anfangszählerstand ausgehend, durch welchen das Setzen des den Anfang eines Datensignalblockes kennzeichnenden Kennbits in den bestimmten Binärzustand festgelegt ist, die fortlaufende Adressierung der dem Speicher mit wahlfreiem Zugriff (RAM) zugehörigen Speicherzellen bewirkt, daß der Inhaltszähler (Z2), ausgehend von einem den Leerzustand des Speichers mit wahlfreiem Zugriff anzeigenden Anfangszählerstand, mit jeder Aufnahme eines Datensignalwortes in den Speicher mit wahlfreiem Zugriff (RAM) seinen momentanen Inhaltszählerstand erhöht und seinen durch die jeweilige Datensignalblocklänge gegebenen Inhaltszählerstand, welcher ein Maß für den erreichten Zählerstand des Schreib-/Lese-Zählers (Z1) ist, festhält und daß beim anschließenden Auslesen von Datensignalwörtern aus dem Speicher mit wahlfreiem Zugriff, ausgehend von dem zuvor erreichten Zählerstand des Inhaltszählers, dessen momentaner Zählerstand bis zum Erreichen des genannten Anfangszählerstandes erniedrigt wird, welcher das Unwirksamschalten des Schreib-/LeseZählers (Z1) und das Setzen des das Ende des Datensignalblockes kennzeichnenden Kennbits in einen bestimmten Binärzustand bewirkt.

4. Schaltungsanordnung nach einem der Ansprüche 1 bis 3, **dadurch gekennzeichnet,** daß die Signalbehandlungseinrichtung (MP, MEM) aus einer Mikroprozessoranordnung gebildet ist.

**Claims**

1. Circuit arrangement for transmitting data signals between control devices (SUO, RA;....; SUn, RA; TUO, RA, ...; TUk, RA), connected to one another via a clock-controlled directionally dependently operated loop network (RING0, RING1), which, in particular, are formed by control devices of a data switching system, in which arrangement a transmit authorisation signal can be transmitted from control device to control device via the loop network and controls these devices in each case into one transmit authorisation state and before the forwarding of which a transmitter arrangement (MP, MEM, SP) in each case belonging to the control devices emits data signals to be transmitted by the respective control device, together with at least one receiver address designating a desired control device and with a transmitter address designating the respective control device as transmitter, to the loop network, each of the transmitter arrangements exhibiting a signal processing device (MP, MEM) which assembles the data signals to be transmitted by the associated control device with addition of at least one receiver address and the transmitter address to form at least one data signal block consisting of at least one data signal word having a predetermined number of bits, and which is followed by a transmit buffer arrangement (SP) with a read-write memory (RAM) exhibiting a plurality of storage cells for a word-by-word acceptance of an assembled data signal block, characterised in that the read/write memory is constructed as random-access memory (RAM),
that the random-access memory is connected to a counter arrangement (Z1, Z2, SBS) which, on the one hand, starting from a predetermined initial count, progressively addresses the said storage cells for the word-by-word acceptance of a data signal block as determined by a count changing with a write clock corresponding to the operating speed of the signal processing device (MP, MEM) and is stopped at a count predetermined by the respective data signal block length and which, on the other hand, following the reception of a transmit authorisation signal, provides the possibility of a word-by-word reading-out of a data signal block just stored in the storage cells of the random-access memory (RAM) by means of a change in its count progressing with a read clock corresponding to the operating speed of the loop network starting from the said initial count up to the stopped count, that the random-access memory is followed by a register (Reg5) which, apart from storage spaces for the accommodation of a data signal word, additionally exhibits storage spaces for additional information items to be added to the individual data signal words, and that the additional information items are derived from the counts of the said counter arrangement.

2. Circuit arrangement according to Claim 1, characterised in that identification bits identifying the start and the end, respectively, of a data signal block are provided as additional information items, the occurrence of which in a particular binary state ("0") is fixed by the initial count and, respectively, the maximum count.

3. Circuit arrangement according to Claim 2, characterised in that the counter arrangement (Z1, Z2, SBS) exhibits a read/write counter (Z1) and a content counter (Z2), that the read/write counter effects the progressive addressing of the storage cells belonging to the random-access memory (RAM) for the word-by-word acceptance and, respectively, reading-out of a data signal block starting from the predetermined initial count by means of which the setting of the identification bit identifying the start of a data signal block into the particular binary state is determined, that the content counter (Z2), starting from an initial count indicating the empty state of the random-access memory, increments its instantaneous content count with each acceptance of a data signal word into the random-access memory (RAM) and holds its content count, which is a measure of the count reached in the read/write counter (Z1) and which is given by the respective data signal block length, and that, during the subsequent reading-out of data signal words from the random-access memory, starting from the previously reached count of the content counter, its instantaneous count is decremented until the said initial count is reached which effects the disabling of the read/write counter (Z1) and the setting of the identification bit identifying the end of the data signal block into a particular binary state.

4. Circuit arrangement according to one of Claims 1 to 3, characterised in that the signal processing device (MP, MEM) is formed by a microprocessor arrangement.

**Revendications**

1. Montage pour transmettre des signaux de données entre des dispositifs de commande (SUO, RA;...; SUn, RA; TUO, RA, ....; TUk, RA), qui sont reliés entre eux par l'intermédiaire d'un système de lignes en anneau (RING0, RING1) commandé de façon cadencée et fonctionnant en fonction du sens de transmission, et sont formés notamment par des dispositifs de commande d'un système de commutation de données, et dans lequel le système de lignes en anneau est à même de transmettre, d'un dispositif de commande à un autre, un signal d'autorisation d'émission qui placee ce dispositif de commande respectivement dans un état d'autorisation d'émission, et, avant la retransmission de ce signal, un dispositif formant émetteur (MP, MEM, SP), respectivement associé aux dispositifs de commande, envoie au système de lignes en anneau, des signaux de données, qui doivent être émis par le dispositif de commande respectif, conjointement avec au moins une adresse de récepteur désignant un dispositif de commande désiré et avec une adresse d'émetteur désignant le dispositif de commande respectif comme étant l'émetteur, et dans lequel chacun des dispositifs d'émission possède un dispositif (MP, MEM) de traitement de signaux, qui réunit les signaux de données devant être émis par le dispositif de commande associé, moyennant l'adjonction moins d'une adresse de récepteur et de l'adresse d'émetteur, pour former au moins un bloc de signaux de données constitué par au moins un mot de signaux de données possédant un nombre prédéterminé de bits, et en aval duquel est branché un dispositif formant tampon d'émission (SP) comportant une mémoire d'enregistrement/lecture (RAM) possédant une multiplicité de cellules de mémoire, pour une réception mot après mot d'un bloc de signaux de données assemblé, caractérisé par le fait que la mémoire d'enregistrement/lecture est réalisée sous la forme d'une mémoire (RAM) à accès direct, qu'à la mémoire à accès direct est raccordé un dispositif de comptage (Z1,Z2,SBS), qui d'une part, à partir d'un état de comptage initial prédéterminé, adresse en permanence lesdites cellules de mémoire pour la réception mot après mot d'un bloc de signaux de données, en fonction d'un état de comptage qui varie avec une cadence d'enregistrement correspondant à la vitesse de travail du dispositif (MP, MEM) de traitement de signaux, et est maintenu dans un état de comptage prédéterminé par la longueur respective du bloc de signaux de données, et qui, d'autre part, lors de la réception d'un signal d'autorisation d'émission, permet, à partir dudit état de comptage initial, sur la base d'une modification de son état de comptage, qui se poursuit avec une cadence de lecture correspondant à la vitesse de travail du système de lignes en anneau, jusqu'à l'état de comptage retenu, une lecture mot après mot d'un bloc de signaux de données mémorisé précisément dans les cellules de la mémoire (RAM) à accès direct, qu'en aval de la mémoire à accès direct est branché un registre (Reg5), qui comporte en outre, en dehors d'emplacements de mémoire pour la réception d'un mot de signaux de données, des emplacements de mémoire pour les informations supplémentaires devant être adjointes aux différents mots de signaux de données, et que les informations supplémentaires sont tirées des états de comptage desdits dispositifs de comptage.

2.  Montage suivant la revendication 1, caractérisé par le fait qu'il est prévu comme informations supplémentaires, des bits caractéristiques, qui caractérisent le début et la fin d'un bloc de signaux de données dont l'apparition est fixée dans un état binaire prédéterminé ("0"), par l'état de comptage initial ou par l'état de comptage maximum.

3.  Montage suivant la revendication 2, caractérisé par le fait que le dispositif de comptage (Z1,Z2,SBS) contient un compteur d'enregistrement/lecture (Z1) et un compteur de contenu (Z2), que le compteur d'enregistrement/lecture réalise l'adressage continu des cellules de mémoire associées à la mémoire à accès direct (RAM), pour la réception ou la lecture mot après mot d'un bloc de signaux de données à partir de l'état de comptage initial prédéterminé, au moyen duquel le positionnement du bit caractéristique, qui caractérise le début d'un bloc de signaux de données, est fixé dans l'état binaire déterminé, que le compteur de contenu (Z2) augmente son état de comptage instantané de contenu à partir d'un état de comptage initial indiquant l'état vide de la mémoire à accès direct, lors de chaque réception d'un mot de signaux de données dans la mémoire à accès direct (RAM), et conserve son état de comptage de contenu, qui est déterminé par la longueur respective du bloc de signaux de données et est une mesure de l'état de comptage atteint par le compteur d'enregistrement/ lecture (Z1), et que lors de la lecture ultérieure de mots de signaux de données à partir de la mémoire à accès direct, l'état de comptage instantané du compteur de contenu est réduit depuis l'état de comptage atteint précédemment jusqu'à ce que soit atteint ledit état de comptage initial, qui provoque l'arrêt du compteur d'enregistrement/lecture (Z1), le positionnement du bit caractéristique, qui caractérise la fin du bloc de signaux de données, dans un état binaire déterminé.

4.  Montage suivant l'une des revendications 1 à 3, caractérisé par le fait que le dispositif (MP, MEM) de traitement de signaux est formé par un dispositif à microprocesseur.

# FIG 1

FIG 2

# FIG 3

EP 0 214 475 B1

# FIG 4

# FIG 5

17